# EUROPEAN PATENT APPLICATION

(11) **EP 1 079 661 A1**
(43) Date of publication of application: **28.02.2001**
(21) Application number: 99440235.2
(22) Date of filing: 20.08.1999
(51) Int. Cl.: H04Q 11/04

(54) **Method and circuit arrangement for selecting ATM cells in queues**

(71) Applicant: ALCATEL, 75008 Paris (FR)
(72) Inventor: De Cnodder, Stefaan Jozef, 2275 Lille (BE); Hoebeke, Rudy Georges, 2100 Deurne (BE)
(74) Representative: Brose, Gerhard, Dipl.-Ing.

(57) **Abstract**

The invention relates to a method for selecting one ATM cell (ATMcell) at a time from a multiplicity of ATM cells waiting in at least one queue (IL1, IL2, ..., ILn) for transfer via a common output line (OL), in which those ATM cells which belong to a still incomplete packet (Frame) of related ATM cells are assigned a higher priority, and also to a circuit arrangement for this purpose.

## Description

The invention relates to a method for selecting ATM cells waiting in queues according to the preamble of Claim 1 and to a circuit arrangement for selecting ATM cells waiting in queues according to the preamble of Claim 2.

In the case of the transfer of information in the asynchronous transfer mode (ATM), as is also widespread in the case of other transfer methods, a plurality of message streams is transmitted via the same transfer medium. At the point at which the message streams come together, they have to be transposed in a suitable manner onto the common transfer medium. In the case of asynchronous transfer mode (ATM), this is done in such a way that the individual message streams already subdivided into ATM cells are fed via one or more queues to the common output line. Regarded here as output line is any transfer medium which, although still logically possible, can no longer be partitioned physically into further transmission channels. In this connection, it is endeavoured, on the one hand, to allot each individual message stream that transmission capacity and, at the same time, to maintain that quality of service which is provided for it and, on the other hand, to achieve a uniform and statistical utilization of the output line.

However, there is now, for example, the service in the case of ATM which is denoted as "guaranteed frame rate (GFR)". In the case of this service, as is standard in the case of ATM, the information to be transferred is subdivided into a multiplicity of consecutive ATM cells. This service is useful wherever, at the instant of dispatch, a complete aggregate of information is already present which then yields a complete packet (here termed "frame") containing a limited number of ATM cells. This is, for example, the case for the "transmission control protocol (TCP)" and any other application in the Internet. In such cases, however, the evaluation at the receiver can not start before the complete packet has arrived. An essential criterion for the assessment of the quality of transmission becomes evident in this case if, instead of average values over all the cells, only average values for the respective last cells of such packets are taken into account. This requires a different handling of such ATM cells.

The object of the invention is to specify a method and a circuit arrangement with which the ATM cells of a packet of related ATM cells are treated in such a way that the criteria necessary for this purpose can be adhered to.

This object is achieved, according to the invention, by a method according to the teaching of Claim 1 and a circuit arrangement according to the teaching of Claim 2.

An attempt is consequently to be made to transfer, if possible, only complete packets of ATM cells belonging together.

Further refinements of the invention are to be found in the subclaims and the description below.

The invention is explained further below by reference to the accompanying drawings:
- Figure 1: shows, by way of example, the execution of the method according to the invention in a circuit arrangement according to the invention.
- Figure 2: shows a table in the circuit arrangement according to the invention, with whose aid the method according to the invention can be executed.
- Figure 3: shows algorithms with whose aid the table according to Figure 2 can be evaluated.
- Figure 4: shows, in a simplified case for some consecutive instants in time, the contents of the first two lines of the table according to Figure 2.

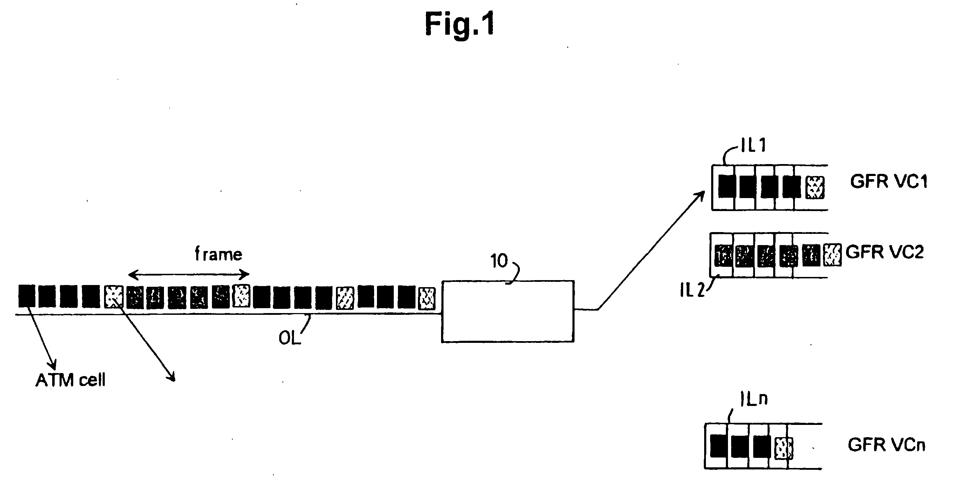

The execution of the method according to the invention is described briefly by reference to Figure 1.

Figure 1 shows, in the centre, a circuit arrangement 10 according to the invention and also, on the left thereof, an output line OL and, on the right thereof, a series of input lines with input queues IL1, IL2, ..., ILn.

In this example, a virtual channel VC and an input queue are assigned to every input line. In principle, a queue could also be assigned to a plurality of input lines. In that case, however, it would also have to be possible to access, if necessary, entries which are not at the end of the queue. Whether the waiting ATM cells are stored as such in a queue in each case or whether they are temporarily stored in another type of memory and this is only referred to in the queue is unimportant.

A series of ATM cells is shown both in the queues and on the output line. In this example, only ATM cells are shown which belong to the above-mentioned "guaranteed frame rate (GFR)" service. The contents of the queues are therefore denoted by GFR VC1, GFR VC2, ... and GFR VCn. Precisely one complete packet of ATM cells which represents such a "frame" in the GFR service is represented in each queue shown. The last ATM cell EOFcell of the respective packet is specially identified. Of course, more packets may also be present in a queue or no packet at all may be present.

Shown on the output line OL is, from left to right, first a GFR VC1 packet, then a GFR VC2 packet, then again a GFR VC1 packet and, lastly, a GFR VCn packet. The attempt to transfer only entire packets of related ATM cells is therefore successful in this case. The preferential treatment of GFR VC1 shown here with respect to GFR VCn is intended to reflect the fact that the other ATM criteria continue to be valid, and that, in this case, a connection which is logged on with a high capacity and for which more is also paid therefore has priority over another for which this is not the case. For the same reason, in the case of excessively long packets of related ATM cells, the principle of transferring such packets only as a whole may be overridden, which is not shown here.

The identification of the last ATM cell of a packet is assumed in this case. This can be done, for example, by a certain bit in the payload functioning as packet-end bit. Only this one bit then has to be made accessible and examined. The above mentioned GFR service uses a protocol named AAL5, in which the end-of-frame bit is set, functioning as such packet-end bit. For ATM cells which do not belong to the GFR service this does not necessarily apply.

The arrow from the circuit arrangement 10 to the queue IL1 is intended here not to indicate the path of the information, but that information is retrieved from the respective queue by the circuit arrangement.

A simple example of how the basic idea of the invention can be achieved is now presented below. In this example, it is assumed that all connections belong to the GFR service and that no other priorities are to be taken into account. The only difference is that the agreed and, consequently, also guaranteed "minimum cell rate" (MCR) and also the actual traffic of the individual connections are different.

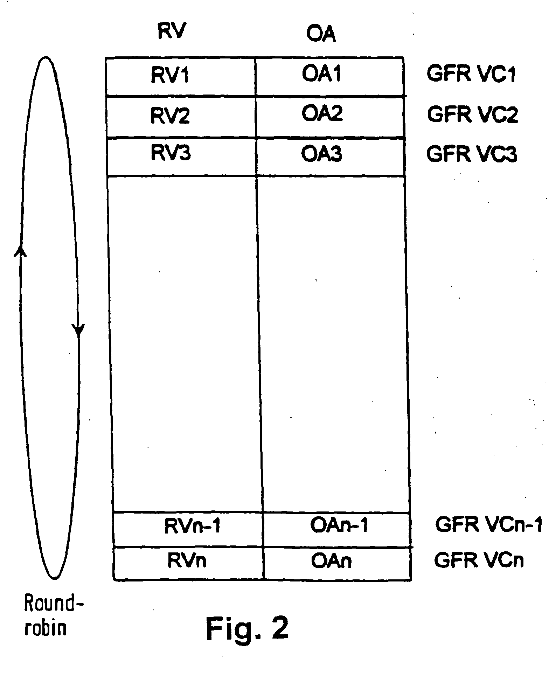

As already mentioned, Figure 2 shows a table in the circuit arrangement according to the invention with whose aid the method according to the invention can be executed. This table is constructed in that figure as a memory, the numbers of the queues GFR VC1, ..., GFR VCn serving as addresses for two memory locations in each case which contain, on the one hand, a reference value RV and, on the other hand, an over-allocation value OA.

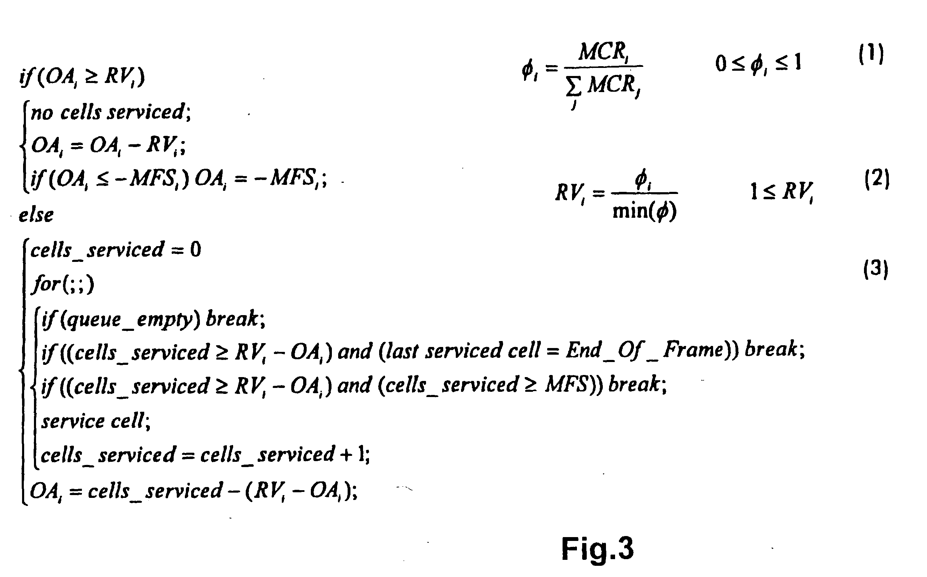

The reference value RV is determined by the algorithm defined in Figure 3 by the equations (1) and (2). In accordance with equation (1), every connection is first assigned a weighting which is determined by the "minimum cell rate" (MCR) of the respective connection and the sum of said weightings of all the connections. Said weighting value is between 0 and 1 and is unsuitable for a rapid, simple evaluation. The reference value RV is therefore formed, in accordance with equation (2) by setting the respective weighting with respect to the minimum weighting.

According to a cyclic method normally referred to as a "round-robin" method, it is then consecutively determined in accordance with the algorithm (3) in Figure 3 for every queue whether ATM cells are being extracted from it and, if so, how many.

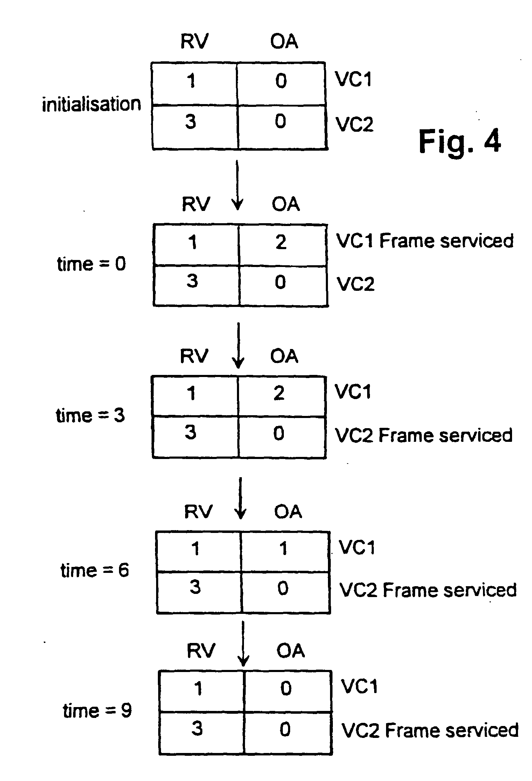

This is shown on the basis of Figure 4 by an example which is simplified still further with respect to Figure 3. Here it is further assumed, by way of simplification, that only two queues are present for the virtual channels VC1 and VC2, that said queues are sufficiently filled and that all the packets have an equal length of three ATM cells in each case. To illustrate the method better, the two queues differ, however, in that they have been assigned different reference values RV, namely 1 and 3. During the initialization, the reference values RV are determined and entered, and the over-allocation values OA are set to zero. In the case of the first run, the first queue is serviced at the instant in time = 0 and a packet is delivered from it (Frame serviced). Since, according to the algorithm (3), three ATM cells are delivered, three time units have already elapsed after the first processing of this algorithm so that the instant in time = 3 has now been reached. The run through the algorithm (3) which now starts results in the delivery of a packet from the second queue. The next two runs, which always last for three time units and always take place at an interval of three time units also each result in the delivery of a packet from the second queue since this has been assigned a reference value which is three times as high. Subsequently, i.e. at the instant in time = 12, which is not shown here, the same situation exists again as at the instant in time = 0.

If the configuration of the case is not as simple as here, this must, of course, correspondingly be taken into account. This can be done, for example, by incorporating further interrogations for different priorities or different requirements in the algorithm (3) and by providing reactions tailored thereto.

It is striking that, in this procedure, no reference is made to the GFR value which, after all, is to be understood as "guaranteed frame rate". Here, this value is regarded more as yes-no information and is evaluated insofar as the algorithm (3) is actually applied to the associated connection.

The method according to the invention and the circuit arrangement according to the invention now ensure, on the one hand, that only entire packets are transferred if possible (in this connection see also the interrogation term "cells_serviced ≥ MFS" in the algorithm (3)), but that, on the other hand, each connection is allotted that capacity which is stipulated for it and, consequently, also paid for. The method and the circuit arrangement can be used at any point in the network; they were developed in connection with network accesses.

## Claims

1. Method for selecting one ATM cell (ATMcell) at a time from a multiplicity of ATM cells waiting in at least one queue (IL1, IL2, ..., ILn) for transfer via a common output line (OL), **characterized in** that those ATM cells which belong to a still incompletely transferred packet (Frame) of related ATM cells are assigned a higher priority.

2. Circuit arrangement for selecting one ATM cell (ATMcell) at a time from a multiplicity of ATM cells waiting in at least one queue (IL1, IL2, ..., ILn) for transfer via a common output line (OL), **characterized in that** the circuit arrangement contains means (10) for assigning a higher priority to those ATM cells which belong to a still incompletely transferred packet (Frame) of related ATM cells and in that it furthermore contains means for preferentially transferring ATM cells which have been allotted a higher priority.

3. Method according to Claim 1, characterized in that a packet of related ATM cells is preferably transferred in a direct consecutive sequence.

4. Method according to Claim 1, characterized in that the occurrence of packet end information contained in the respective last ATM cell (EOFcell) of a packet is evaluated in order to detect the completion of a packet.
